# EUROPEAN PATENT SPECIFICATION

(11) **EP 3 772 878 B1**
(45) Date of publication and mention of the grant of the patent: **27.12.2023**
(21) Application number: 19724620.0
(22) Date of filing: 15.04.2019
(51) Int. Cl.: A01B 33/06, A01B 33/08, A01B 33/10

(54) **ROTARY HARROW**
KREISELEGGE
HÈRSE ROTATIVE

(30) Priority: 13.04.2018 IT 201800004472
(43) Date of publication of application: 17.02.2021
(73) Proprietor: Colombino, Marco, 12032 Barge (CN) (IT)
(72) Inventor: Colombino, Marco, 12032 Barge (CN) (IT)
(74) Representative: Sach, Greg Robert
(86) International application number: PCT/IB2019/053084
(87) International publication number: WO 2019/198062

(56) References cited:
- EP-A1- 2 319 284
- DE-A1- 2 651 403
- FR-A1- 2 345 896
- FR-A1- 2 558 028
- US-A- 3 949 813
- US-A- 4 187 915

## Description

### Field of the invention

This invention concerns a device to be applied to a rotary harrow.

### Known art

As it is well known, the rotary harrow is an agricultural machine used mainly in the preparation of agricultural land in the phase prior to sowing and which can be used as a substitute for the ploughing operation (for surface working) or as a complement to this operation (to crush the clods and obtain an optimal refinement of the seedbed in order to improve the sprouting of seeds). Its action is to break up the clods of soil through the impact between tools and the ground and make them uniform in size. The traditional version of the harrow defined as a trawler consists of a number of nails associated in various ways with a strong fixed frame that is dragged on the ground at a given towing speed Va by a towing machine, called a tractor, resulting in an approximate irregular and shallow shock crushing of the clods. As technology progressed, animated harrows were built, particularly with oscillating or rotating tools. In the latter, pairs of counter-rotating tools, rigidly joined to kinematically associated supports in synchronism and in angular phasing between them (generally 90°) to a source of motion (generally connected to the driving machine) rotate at different preset speeds according to a normal axis m to the direction of advancement X of the tractive machine. A tool configured in this way achieves a significantly higher crushing result than the traditional trawl harrow, finely crushing the soil as the combination of feed speed and tool rotation varies, a combination that generates a cycloidal tool trajectory.

This action gives rise to significant agronomic benefits.

However, these types of machines still have considerable disadvantages, particularly related to the high wear of the tools and the high power absorbed during the work phase, which allows therefore a profitable use only with tractors of considerable power.

The individual tools working in different soils, which are known not to be homogeneous, are subjected at the same time to considerable stress both of a continuous nature due to the opposite reaction to the advancement and cutting of the clods and of an impulsive nature due to the impact against obstacles such as, for example, stones or roots.

The continuous stresses are generated because the tools are rigidly connected to rotating supports and subjected to the effect of the rotation of the same (necessary for cutting the ground) and the translation of the same.

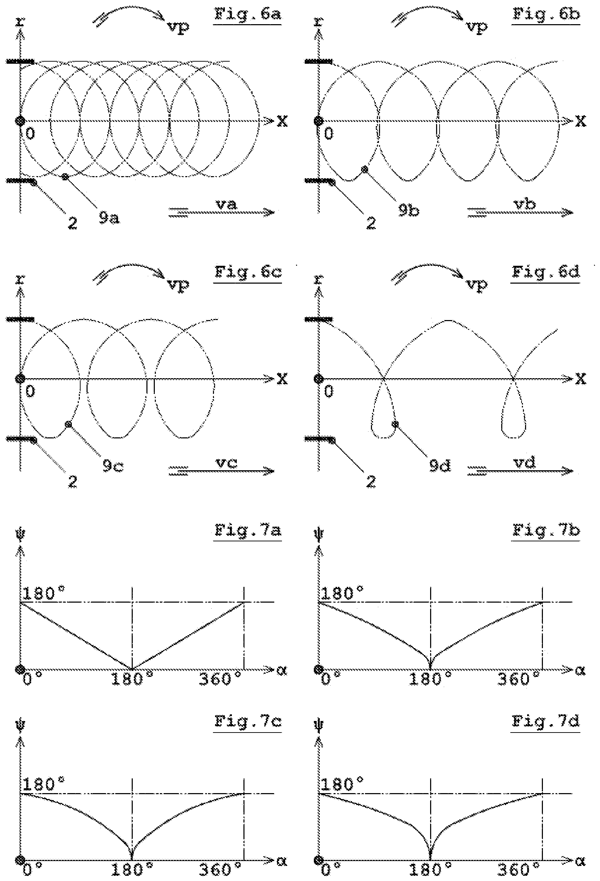

Compared to the first versions, which provided for tools of semi-circular or similar section, in the current technique they are made with a shape defined in jargon "knife": that is, they have a penetration sharpened form with a frontal section with respect to rotary motion less than the lateral one. In fact, there are blades arranged tangentially to the ideal circumference generated by the rotation of the counter-rotating arms. (ref. to the following fig.6)

This shape, however, has the disadvantage of offering considerable resistance to the movement of the harrow, especially when the tools are with the largest surface section arranged in angular positions normal to the advancement direction Va. From this it follows that the tractor must provide a share of parasitic power in addition to that required for the sole cutting of the ground to overcome the resistance to advancement. This power is therefore supplied unnecessarily for agronomic purposes and therefore wasted from an economic point of view, resulting in pollution, machine and tool wear and other related disadvantages.

Document DE 26 51 403 A1 discloses a rotary harrow device comprising at least a frame connected to at least one bevel gear unit to which is inferiorly connected a transmission unit to which are connected rotating supports comprising a plurality of pairs of tools arranged vertically, whereby the frame is connectable by means of a three-point attachment with a tractor machine, the bevel gear unit being connectable by means of a cardan shaft to a power take-off of the tractor.

Document FR 2 558 028 A1 discloses a soil cultivating implement of the kind which comprises a plurality of soil working members that are rotatable about corresponding axes a and include soil working tools, each tool has a strip-shaped soil working portion that is of curved cross-sectional shape. Also, each soil working portion is twisted about its own longitudinal axis in such a way that the leading edge thereof, with respect to the direction of rotation of the member concerned, is closer to the corresponding axis a than is the rear edge thereof. Each soil working portion tapers downwardly towards its substantially horizontally disposed free end.

From the above, in order to compensate for this difficulty, the present invention describes an innovative perfected rotary harrow device, with, among the various purposes, that of reducing the states of stress and loss of power due to the advancement effort and the consequent loss of power.

Furthermore, a purpose of this invention is to describe a rotary harrow device that optimizes the performance of the same.

A further purpose of this invention is to describe an innovative rotary harrow device that reduces wear on the harrow and its parts.

Another purpose of the present invention to reduce energy consumption.

It is also a purpose of the present invention to describe a rotary harrow device that reduces the costs and the polluting impact of its use.

### BRIEF DESCRIPTION OF THE INVENTION

More specifically, the invention concerns the description of a device for perfecting a rotary harrow and aims to improve its efficiency without complicating its structure.

This aim is basically translated into the creation of a rotary harrow in which the tools 2 can be positioned in the actual trajectory of cycloidal shape (reference subsequent to figures: 6a-6b-6c-6d) resulting from the composition of the rotary motion vp and of translation of the machine va, positioning obtained automatically varying the speed of rotation of the tools and the speed of advancement of the harrow, said tools being in turn mobile and not fixed.

Another aim is to create maintenance-free structures that are ordinary and easy to dismantle for extraordinary maintenance, such as the replacement of worn parts.

Last but not least, the aim is to make improvements to a rotary harrow, such as to make its operation and use more advantageous and to allow it to be used with machines with relatively lower power than those required today, avoiding the losses of power defined as parasitic.

These and other purposes are realized by virtue of the improved innovative rotary harrow device 1 comprising at least a frame 63 connected to at least to a bevel gearbox 64 to which is connected below a transmission group 11 to which are connected rotating supports 5 including a plurality of pairs of tools 2 arranged vertically, said frame being connected by a three-point attachment with a tractor 4, said bevel gearbox 64 being connected by means of a cardan shaft 65 to a power take-off of the tractor, said rotary harrow device, being characterised by the fact that that said harrow further comprises at least one device 200 for the automatic adjustment of the position of a pair of tools 2 in relation to an axis 7 of rotation, said device 200 comprising at least one control unit of the mechanical type 201 and a transmission unit 202 between that control unit 201 and tools 2, said unit 201 comprising at least one cam 53 to which are connected mechanical means 210 to which are connected control levers 42A,42B which in turn are connected to levers 41A,41B of unit 201, said levers 41A,41B being connected to said motion transmission unit 202, said unit 202 including levers 46A,46B which are connected to said tools 2, said system 202 between said levers 41A,41B and said levers 46A,46B including a plurality of shafts 26,35A,35B and circular eccentrics 38A,38B, said shafts 35A,35B being connected to the levers 41A,41B and being connected to said eccentrics which are in contact with said levers 46A,46B, the grooved cam 53 of the unit 201 rotating puts in oscillatory movement the mechanical means 210, that oscillating put in turn in oscillation said control levers 42A,42B, said control levers transmitting the oscillatory motion to the levers 41A,41B, said levers transforming the oscillatory motion in semi-rotary motion to the shafts 35A,35B, said shafts having axis of rotation m eccentric with respect to the circular eccentrics 38A,38B, said eccentrics pushing on the levers 46A,46B determining a rotation of the tools 2 around an axis 7, the tools being therefore no more fixed, but advantageously mobile, disposing themselves in their trajectory of displacement tangent to the curve of cycloidal displacement deriving from the rotary motion of the harrow and traslatory given by the advancement of the tractor 4.

According to this principle described below in this invention, the efficiency of the rotating harrow is improved.

In particular, compared to the known art, as for example the document U S3 949 813 describing an oscillating harrow, the present invention deals with rotary harrows, therefore realized with a different principle, and in a very advantageous and innovative way compared to the prior art the present innovative device rotary harrow includes tools in turn rotating around one of their axes.

### BRIEF DESCRIPTION OF THE FIGURES:

Further characteristics and advantages of the invention will be further clarified by the description of a particularly preferred form of realization of the present invention, this form of realization provides a mere example of realization and is carried out by way of example but not limited to, and illustrated in the attached drawings in which:

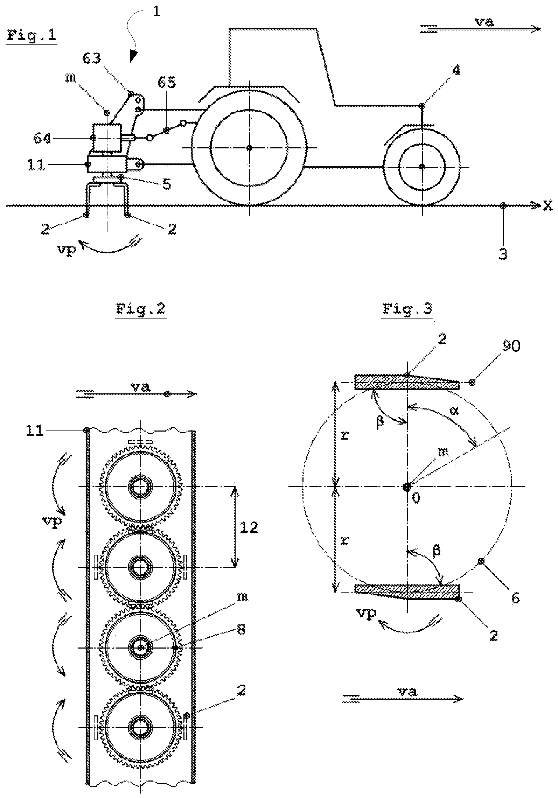

- in fig. 1 it is represented a side view of a standard representation of a generic coupling between rotary harrow 1 connected to a tractor 4 during work on the ground 3;
- in fig. 2 it is represented a transparent view from the top of the operating diagram of the harrow's transmission 11 by means of toothed wheels 8, with the indication of the directions of rotation of the counter-rotating peripheral speed vp of each toothed wheel;
- in fig. 3 it is represented a typical diagram of how tools 2 are positioned at a fixed distance r with respect to the vertical axis of rotation m and in which the angle β is fixed and substantially perpendicular to the radius r; it also shows the direction of advancement of the harrow Va and of rotation of the tools vp that rotate describing the trajectory 6;

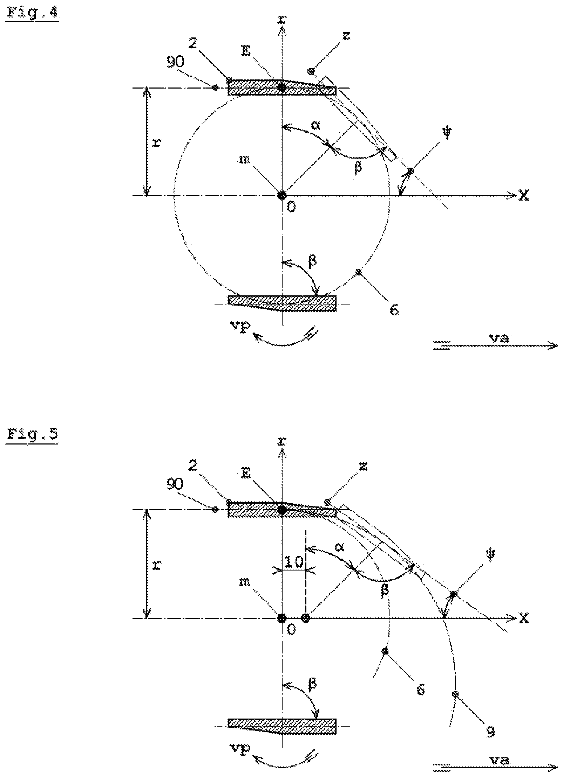

- in fig. 4 it is represented a typical scheme with the indication of the circular trajectory type 6 described by the tools 2 when the harrow does not advance and therefore the feed speed goes is equal to zero. The angle β remains constant and equal to 90° with respect to the radius r;
- in fig. 5 it is represented the typical scheme with the indication of the cycloidal trajectory 9 described by the tools 2 when the harrow advances at a certain feed rate it goes, and determining the displacement 10 along the X feed direction. In today's rotary harrows the angle β remains constant and equal to 90° with respect to the radius r. The aim of the invention is instead to vary in synchronism with the angle α of rotation of the radius r, the angle ψ formed by the tangent z to the cycloid 9 and the direction of advancement X passing through the axis of rotation m of the rotor assembly.
- in fig. 6a it is represented a simplified view of the cycloidal trajectory 9a described by a single tool 2 positioned on a rotating support 5 with a radius of 0.125 meters, equipped with a peripheral speed of 4.42 meters/sec and towed in the direction of advancement X at the advancement speed of 0.56 meters/sec;
- in fig. 6b it is represented a simplified view of the cycloidal trajectory 9b described by a single tool 2 positioned on a rotating support 5 with a radius of 0.125 meters, equipped with a peripheral speed equal to 4.42 meters/sec and towed in the direction of advancement X at the advancement speed of 1.39 meters/sec;
- in fig. 6c it is represented a simplified view of the cycloidal trajectory 9c described by a single tool 2 positioned on a rotating support 5 with a radius of 0.125 meters, equipped with a peripheral speed equal to 4.42 meters/sec and towed in the direction of advancement X at the advancement speed of 1.95 meters/sec;
- in fig. 6c it is represented a simplified view of the 9d cycloidal trajectory described by a single tool 2 positioned on a rotating support 5, in this example of a radius of 0.125 meters, with a peripheral speed of 4.42 meters/sec and towed in the direction of feed X at the advancement speed of 2.78 meters/sec;
- in fig. 7a-7b-7c-7d the variation of the angle of tangency ψ are represented on graphs and in which the value of the angle tangent to the cycloid ψ is shown on the Y-axis of said graphs when the positioning of tools 2 changes during the rototranslatory movement of the latter, and on the X-axis the cyclic variation of the angle α due to the rotation of the radius r. The graphs respect the kinematic conditions of figures 6a-6b-6c-6d;
- in fig. 8 it is represented a cross-section view of the vertical axis (m) of the rotating harrow indicated in figure 1 with the indication of the elements constituting the rotating unit known as the rotor;
- in fig. 9 it is represented a cross-section view of a rotor of the improved harrow equipped with the device for automatic adjustment of the working position 200 of tools 2 in order to highlight the various components of the system described in the present description;
- in fig. 10 it is represented an exploded view on the vertical axis (m) of a rotor of the improved harrow equipped with the device for the automatic adjustment of the working position of tools 2 in order to highlight part of the components of the system described in this;
- in figs. 11a and 11b are represented the top view of the circular eccentrics (38a and 38b) with profiles so that the angle β or ψ of tangency to the cycloidal trajectory varies repeatedly and synchronously with the variation of the angular positioning α of tools 2;
- in fig. 12 it is represented the top view of a rotor of the improved rotary harrow equipped with the device for automatic adjustment of the working position 200 of tools 2 in order to highlight part of the components of the system described in this document, specifically the various mechanisms positioned on the harrow to allow the automation of the device.

### DETAILED DESCRIPTION OF THE FIGURES

During operation, as shown in Figures 1-2-3, each tool 2 is equipped with a certain peripheral speed vp (in this case as an example, assumed to be clockwise) and a certain advancement speed is due to the advancement speed of the tractor. As is well known, the composition of two motions, rotary and translatory, in which the origin of the rotation axis O is bound along the feed direction X and the distance r is constant, determines a trajectory of the tool 2 along the advancement direction X of cycloidal type 9. It should be noted that the current technique provides for the vertical plane 90 of tool 2 to constantly form with the radius r an angle β right, as the angular position α varies.

As mentioned above, both the rotation speed of the tools and the advance speed of the tractor are chosen a priori by the user on the basis of various factors, such as, for example: available power of the tractor, climatic conditions, type of terrain, type of culture, speed ratios available on board the rotary harrow.

It is clear that, given the nature of the cycloidal motion, keeping the radius r constant, but varying the rotation speed vp or the advancement speed va or both, tool 2 gives rise to cycloidal trajectories 20 with different curvature figures 6a-6b-6c-6d.

In fig. 6a-6b-6c-6d there are represented different operating conditions.

Specifically, as can be seen in figure 4, if the advancement speed va is equal to 0.00 meters/second, the trajectory described in figure 6 is a circle of radius r; if instead an advancement speed vx is applied (in the case of the assumed figure equal to 0.56 meters/second) keeping the rotation speed vp constant, as can be seen in figure 5, the cycloidal trajectory 9 is obtained. The same thing described above happens if the rotation speed vp is varied with peripheral speeds vp'...vp"...vp"...vpʺʺ...vpʺʺ

In order to make the functioning of the cycloidal trajectory more clear, the trajectories 9a-9b-9c-9d have been shown in figure 6a-6b-6c-6d: it is to be noted that, with the same angular position α of the radius r with respect to the Y axis, the curvature of the cycloid is different for each of the four trajectories. It is also clear that in the current art, in which the tool 2 is arranged rigidly at right angles to the radius r of rotation, the instantaneous working angle ψ obtained from the intersection of said plane 9 of the tool and the advancement speed X of the rotary harrow does not correspond to the angle ψ that the tangent z to each cycloid describes with the advancement direction X of the machine.

Due to the current nature of the machine, tool 2 cannot be arranged according to the resultant motions applied and precisely with the direction lying on the straight line tangent z to the ideal line of movement X: it is therefore subject to cyclical stress by lateral forces due to the advancement of the machine and does not penetrate the ground in optimal conditions of maximum performance, conditions that are obtained only with relative translations of the tools along the straight line tangent z to the cycloidal curve 9.

From the analysis of the above, it can be seen that, with the variation of the dynamic motions that originate the cycloidal trajectories, also the angles ψ (determined by the intersection between the straight line tangent to the cycloid z and the direction of advancement X on which lies the center of rotation O of the radius r assume variable values). In this regard, in figure 6, the variations of these angles in the operating conditions previously described as an example in figures 6a-6b-6c-6d are reported.

The purpose of this invention is to create an innovative and perfectioned rotary harrow in which tools 2 can at any time of operation, arrange themselves with their own vertical plane 10 lying on the straight line tangent to the cycloidal trajectory 9 originated by the specific characteristics of rototranslatory motion that precisely determine the specific tangent line.

It should be noted that, for reasons of clarity, in some of the attached figures, the representation of certain components, which are visible in other figures, has been omitted.

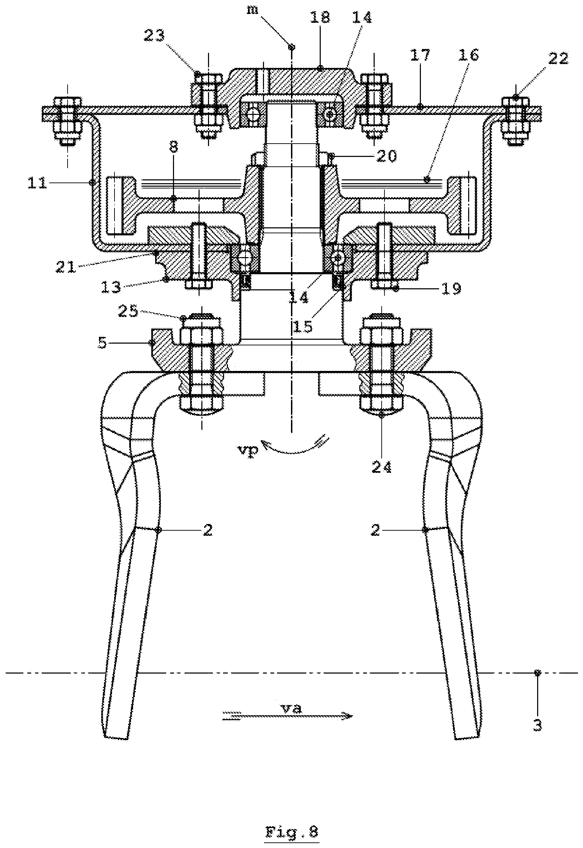

With reference to the above figures, the transmission of a rotary harrow is generally made up of a sturdy sheet metal case 11 suitably profiled supporting in the lower part a plurality of rotating supports 5 positioned at certain spacing 12 kinematically coupled in timing, in the current technique by means of toothed wheels 8. Each vertical axis m carrying the tools 2, is defined as rotor 222 and consists, as shown in figure 8, of a support 13 rigidly bound to the case 11 by welding or threaded elements 19. Inside it is housed one or more bearings 14 (usually of the ball type) and a sealing ring 15 to prevent the leakage of lubricant 16 contained inside the case 11 during operation. In the upper part of the sheet metal case 11 there is a steel profile 17 having the function of enclosing the entire transmission of the harrow: it is generally bound and connected to the case by means of threaded elements 22 to allow easy maintenance of the transmission. On it is mounted rigidly by welding or threaded elements, a second support 18 (fixed to the cover by welding or threaded elements 23) in which is housed one or more bearings 14 (usually of the ball type).

A gasket 21 is placed between support 13 and case 11 to prevent leakage.

The rotating support 5 is splined to the two bearings 14 and fixed to the rotor by tightening the threaded ring nut 20 on the toothed wheel 8 to prevent it from escaping. On the rotating support 5, in turn, the toothed wheel 8 is clamped by means of a shape profile, so as to transmit the rotation to the rotating support itself.

At the outer end of the rotating support 5, tools 2 are generally clamped, with the simplest technique, with the help of threaded elements 24 and 25 so as to allow replacement in the event of breakage or wear.

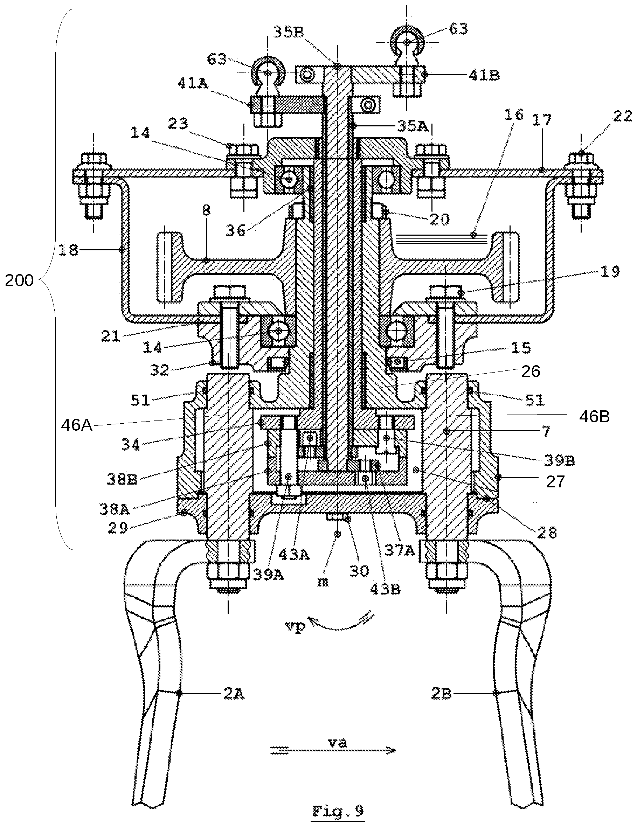

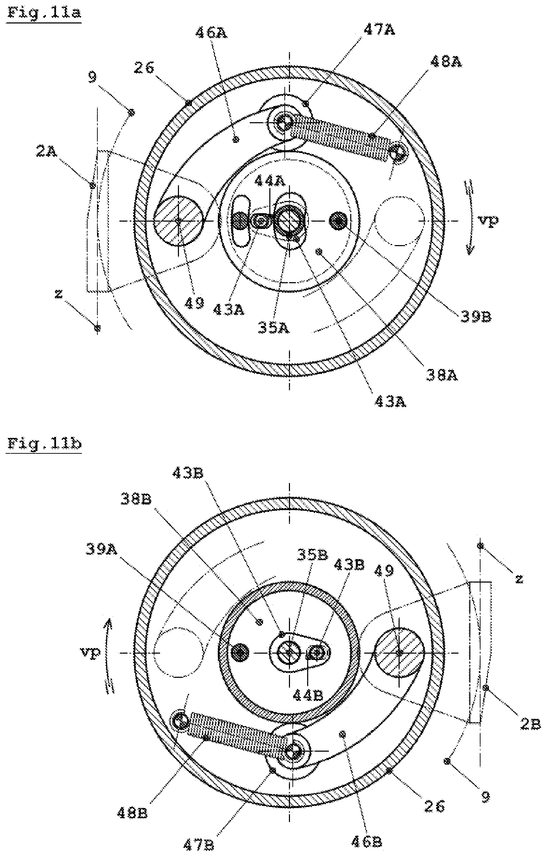

To obtain the functioning of a possible mechanism that allows to obtain the variation of the angle of tangency ψ to the trajectory as described above, by way of example, in Figures 9-10-11, the entire mechanism or innovative device applied to a single rotor of the improved harrow is shown. In particular, we note:

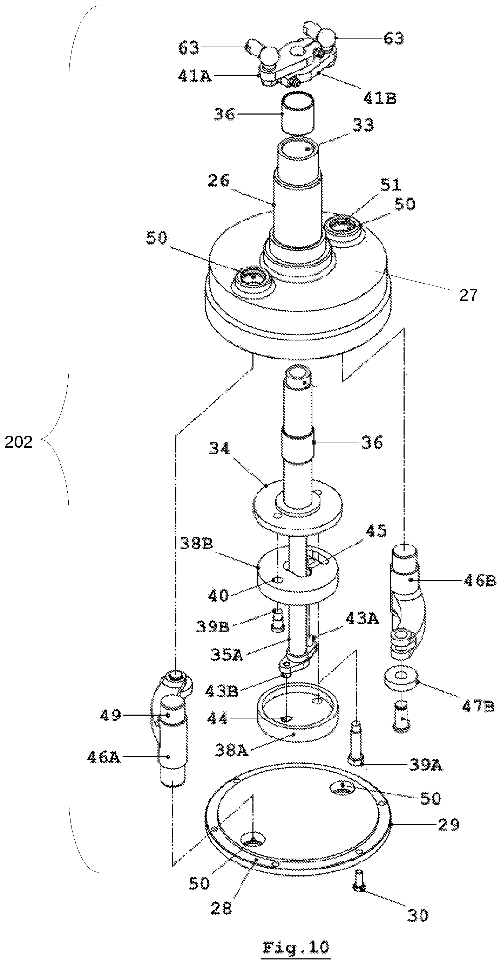

- in fig. 10 it is represented a motion transmission unit 202 comprising: a rotating shaft 26 profile similar to the classic rotating support 5 of traditional rotary harrows but with a bell-shaped profile with a housing 27 at the bottom in which part of the components of the mechanism of the transmission unit such as eccentrics 38, pins 39 etc. are enclosed during operation, as described below. At the lower end of the housing 27 there is a circular housing 28 to allow the positioning of the cover 29 of closure and protection of the device for adjusting the tools. The cover 29 is held in place by the threaded elements 30: the gasket 31 between the two elements prevents the leakage of lubricant 16.
- in fig. 9 it is represented an innovative rotary harrow device including the device 200 for the automatic adjustment of the motion of the tools.

Among the various components, part 32, called the support, is a hub with two housings for the insertion of bearings 14 on which the shaft 26 rotates. This hub is rigidly bound to case 11 by means of mechanical restraint systems. The lower seat is used to secure a rotating seal ring 15 to prevent the lubricant from escaping from the case.
- part 11 is the metal case containing all the rotors and retaining the lubricant;
- the toothed wheel 8 is splined to the rotating shaft by means of systems with shaped teeth along the circumference. The assembly formed by the rotating shaft 26, the support 32, the bearings 14 and the toothed wheel 8 is kept in the correct position by tightening the threaded component 20 placed on the end of the rotating shaft 26.

The device 200 for automatic adjustment described in this comprises, as far as the motion transmission unit 202 is concerned, in addition to the above (for which the unit 202 includes):
- along the revolution axis m of the rotating shaft there is a through hole 33 to allow the passage of the hollow circular support 34. This is rigidly clamped in the upper part to the case 18: during the rotation of the rotating shaft by means of the toothed wheel 8, the support remains clamped in its mounting position. Obviously, there is sufficient movement between the two parts to avoid interference and to allow the lubricant to flow into the bell;
- the axes or drive shafts of the mechanism contained in the housing are positioned inside the hollow circular support 34, in particular the axis/shaft 35A for the control of tool 2A and the axis 35B for the control of tool 2B. Both are made mobile independently of each other and independently of the rotation of the rotating shaft. In order to prevent lubricant leakage, the 35A and 35B axes are equipped with O-ring type seals along their development. To facilitate the reciprocal and independent movement of rotation with respect to the support 34, two or more 36 bushings are inserted rigidly fixed to the circular support 34. The ends of the 35A and 35B axes are fitted with appropriate levers 41A and 41B for operation by the mechanism for managing the angular variation described below.
- the two circular eccentrics 38A (tool rotation control 2A) and 38B (tool control 2B) are positioned inside the housing 27. Both parts are held together with the rotating shaft 26 by means of pins 39A and 39B, allowing the rotation of each eccentric with respect to hole 40 in the eccentric 38B. The oscillating movement of each eccentric is obtained by moving levers 41A and 41B connected to the axles or drive shafts 35A and 35B and in turn operated by control levers 42A and 42B. Pins 43A and 43B slide inside appropriate slots 44A and 44B in each of the two eccentrics.

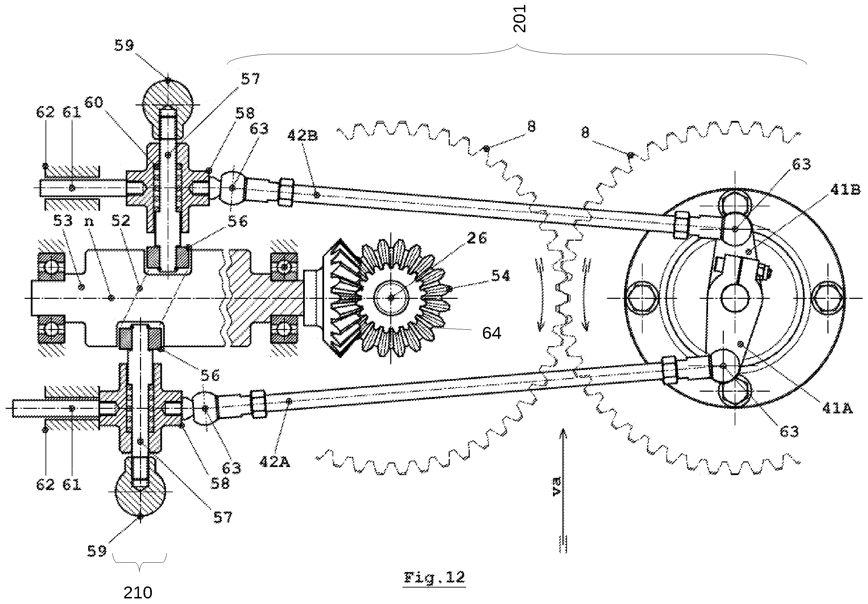

Note that the two circular eccentrics 38A and 38B, although having the same external shape, differ for the presence of the slot 45 in the eccentric 38B, such as to allow the passage of the drive shaft 35A.
- the two eccentrics transmit the oscillation motion to the levers 46A (tool control 2A) and 46B (tool control 2B) by means of the roller 47A and 47B (shown in figure 12, with reference to the mechanical means 210) which rotates idle on the respective lever and is kept constantly tangent to the external circumference of the respective circular eccentric by the tension of the springs 48A and 48B. The levers end on the opposite side to the gallop with a part of form 49 oscillating in the special housings 50 obtained in the bell and in the cover 29. These housings may include the insertion of appropriate bushings to reduce friction. To prevent lubricant from escaping, seats 50 are fitted with O-ring 51 seals.
- at the lower ends of levers 46A and 46B, the profiled ends of tools 2A and 2B of the harrow are inserted so that they can be attached to these levers and give rise to the oscillatory movement.

It is clear that when the two circular eccentrics 38A and 38B are perfectly concentric, the gallops 47A and 47B run around a circumference and consequently the levers 46A and 46B do not undergo any angular variation. This operation is associated with the case in which the tractor is stationary and the rotors are rotating: the ideal trajectory described by each tool 2A and 2B is precisely a circumference 6, as shown in figure 4. When the rotary harrow is equipped with advancement speed va, and the rotors are kept constantly at peripheral working speed vp, the ideal trajectory described by each tool becomes a cycloid 9: the curvature of the same, as described in detail above, is a function, while maintaining the same angular speed, of the advancement speed va.

The mechanism allows the angle of inclination ψ of the tools 2A and 2B to be varied along the ideal cycloidal trajectory 9 by repeatedly and synchronously varying the relative position of the circular eccentrics 38A and 38B by means of the control levers 41A and 41B.

The change in the tangential angle ψ and the oscillation of each control lever 41A and 41B is not random, but depends on the combination of the angular rotational speed vp and the advancement speed va of the tractor: the rototranslatory motion results in a variation of the tangential angle ψ as shown in figures 7a-7b-7c-7d. The management of said variations within a 360° angle cannot be random and is in fact entrusted to a control unit (as an example figure 12).

By way of example, a possible mechanical control unit 201 is shown in figure 12. This control unit includes: mechanical means 210 which include pawls 56, at least one selector 59 with spring 60, thepawls 56 are bound by pins 57 to levers 58.

This unit 210 further includes ball joints 63, control levers 42a 42b, levers 41a,41b, guides 61,62, cam 53 with a groove 52, axis n.

With reference to figures 4,5 and 10,12, the geometric curve of the tangential angle graph ψ is obtained by grooving 52 on the circular cam 53. This circular drum cam is kept in constant rotation by the action (for example, with toothed wheels) of the gear 54 (of the bevel gearbox 64) which rotates at the same angular speed vp as the rotating shaft. Inside the groove 52 are free to move a series of pawls 56, which in turn are constrained by the pins 57 to the levers 58: it is clear that while the circular cam rotates on its axis of revolution n by the effect of the bevel gear, the pawl 56 along the groove 52, translates the rotation in alternating oscillatory movement of the control levers 42A and 42B. In turn, the control levers move the levers 41A and 41B, which allow the oscillation of the respective circular eccentrics in cascade. Obviously, in the case in question of an harrow equipped with tool pairs, the control levers operated by cam 53 are two: one for the operation of lever 41A and one for the operation of control lever 41B (in turn related to the operation of tool 2A and 2B).

The profile of the groove 52 directly determines the degree of rotation of the tools 2 on its own axes 7, and therefore the tangency of the tools to the completed trajectory derived from the rototranslatory motion impressed on the harrow.

A plurality of cams 53 will be advantageously provided, which can be positioned on the same axis of revolution n, each equipped with its own groove 52 corresponding to different pre-established conditions of speed of rotation vp and of translation va, and can be replaced as needed, or a single circular cam equipped with different grooves can be provided.

Using a selector 59 of the spring type 60, the operator can set the circular drive cam 53 to be used in machining according to the two speeds that are decided to be used.

The entire cam drum (or group of cams) and its respective axis of revolution n, rotate on bearings 60. The guides 61 and 62 allow the selectors 59 to be kept in the correct position, while the ball joints 63 at the ends of the control rods allow the transmission of motion between the components when their reciprocal position varies.

The drive can be made automatic, at the same speed of rotation of the crankshaft 26, to vary the advancement speed va of the harrow, as a non-exhaustive example, using a tachometric regulator of centrifugal type in which, varying due to the effect of centrifugal force, the relative position of the collar as the speed of rotation varies (determined in turn by the rotation of a tachometric wheel attached to the harrow) and consequently, by changing the position of appropriate leverage, the position of selector 59 on the correct circular cam 53 to use.

By means of the device 200 described above, tool 2 of the harrow is placed tangent to the ideal displacement curve, indicated by the cycloidal curve 9, since this curve is not a circumference 6 but the result of a rototranslatory motion. In this case, the tool is no longer subjected to lateral forces and always advances in the ground under ideal conditions, with only the forces required to cut the ground being applied. In the traditional case, on the other hand, the tool is not arranged according to the resultant motions applied and is cyclically stressed by lateral forces due to the advancement of the machine.

The fact that the transverse force components have been eliminated advantageously allows the full power applied to the ground to be used according to the cutting edge of the tool, with a consequent reduction in the overall power required. As it is clear, the rotary harrow device described above achieves all the proposed purposes, since the device for adjusting the inclination of the tools always allows them to operate under ideal conditions of minimum effort and wear. This fact also has an impact on the powers used, which may therefore be lower, having reduced the effort required to advance in the ground. Finally, it should be noted that the positioning of the tool profile on the ideal tangent z to cycloid 9 generated by the rototranslatory motion is automatic, and therefore the speed of rotation or linear translation of the tractor can be varied at will; the tools will always be placed in the position of minimum effort. Obviously, starting from the same inventive concept that is the subject of this description, many variations are possible both of the system for varying the angle of tangency ψ to the cycloid of tool 9 and of the system for managing and moving the position of the eccentrics 38A and 38B with variations in the speeds of rotation and translation, but they must be considered as falling within the scope of this invention. The scope of protection is defined by the appended claims.

## Claims

1. Improved rotary harrow device (1) comprising at least a frame (63) connected to at least one bevel gear unit (64) to which is inferiorly connected a transmission unit (11) to which are connected rotating supports (5) comprising a plurality of pairs of tools (2) arranged vertically, said frame being suitable to be connected by means of a three-point attachment with a tractor machine (4), said bevel gear unit (64) being suitable to be connected by means of a cardan shaft (65) to a power take-off of the tractor, said rotating harrow device being **characterized by** the fact that said harrow further includes at least one device (200) for the automatic adjustment of the position of a pair of tools (2) with respect to an axis (7) of rotation of the tools, said device (200) comprising at least one mechanical control unit (201) and one motion transmission unit (202) between said control unit (201) and said tools (2), said unit (201) comprising at least one grooved cam (53) to which are connected mechanical means (210) to which are connected control levers (42A,42B) which are in turn connected to levers (41A,41B) of the control unit (201), said levers (41A,41B) being connected to said motion transmission unit (202), said unit (202) includes levers (46A,46B) of the transmission unit which are connected to said tools (2), said unit (202) between said levers (41A,41B) and said levers (46A,46B) comprising a plurality of shafts (26,35A,35B) and circular eccentrics (38A,38B), said shafts (35A,35B) being connected to the levers (41A,41B) and being connected to said eccentrics which are in contact with said levers (46A,46B), the grooved cam (53) of the unit (201) by rotating causes an oscillatory movement of the mechanical means (210), said means by oscillating putting in turn in oscillation said control levers (42A,42B) said control levers transmitting the oscillatory motion to the levers (41A,41B), said levers transforming the oscillatory motion in rotary motion to the shafts (35A,35B), said shafts having axis of rotation (m) eccentric with respect to the circular eccentrics (38A,38B), said eccentrics push on the levers (46A,46B) determining a rotation of the tools (2) around the axis (7) of rotation of the tools, the tools being therefore mobile and disposing themselves in their trajectory of displacement tangent to the curve of cycloidal displacement deriving from the rotary motion of the harrow and traslatory motion given by the advancement of the tractor (4).

2. Rotary harrow device (1) according to claim 1, in which a plurality of cams (53) are provided that can be positioned on the same axis of revolution (n), each having its own groove (52) matching different conditions of predetermined speed of rotation (vp) and translation (va), and that can be replaced as needed, or a single circular cam (53) with several grooves (52) can be provided.

3. Rotary harrow device (1) according to the previous claims, in which the profile of the groove (52) directly determines the degree of rotation of the tools (2) on their own axes (7), and therefore the tangency of the tools to the completed trajectory derived from the rototranslatory motion impressed to the harrow.

4. Rotary harrow device (1) according to the previous claims, in which said mechanical means (210) include at least one spring (60) operated selector (59) to set the drive circular cam (53) to be used in operation according to two different speeds that are decided to be used.

5. Rotary harrow device (1) according to the previous claims, in which the choice of the groove (52) on the basis of the degree of rotation of the tools (2) on their axis (7) of rotation, and therefore of the cam (53) to be used for a given operating condition can be made manually or automatically.

6. Rotary harrow device (1) according to the previous claims, in which the motor transmission unit (202) in which said plurality of shafts (35A,35B), eccentrics (38A,38) and said levers (46A,46B) are enclosed during operation in a bell-shaped profile of said rotating shaft (26), which has in the lower part a housing (27).

7. Rotary harrow device (1) according to the previous claims, in which said eccentrics (38A,38B) of the transmission group (202) are held integral to the rotating shaft (26) by pins (39A and 39B), allowing the rotation of each eccentric with respect to a hole (40) of the eccentric (38B), the oscillating movement of each eccentric is obtained by the movement of the levers (41A and 41B), attached to the control shafts (35A and 35B) and in turn operated by said control levers (42A and 42B), pins (43A and 43B) sliding inside appropriate slots (44A and 44B) obtained in each of the two eccentrics.

8. Rotary harrow device (1) according to the previous claims, in which the two circular eccentrics (38A and 38B) have the same external shape, but the eccentric (38B) further includes a slot (45) to allow passage of a drive shaft (35A).

9. Rotary harrow device (1) according to the above claims, in which said device (200) for the automatic adjustment of the position of a pair of tools is applied to each pair of tools (2) of rotating supports (5).

## Patentansprüche

1. Verbesserte Kreiselegge-Vorrichtung (1), die mindestens einen Rahmen (63) umfasst, der mit mindestens einem Kegelrad-Einheit (64) verbunden ist, dem eine Getriebeeinheit (11) nachgeordnet ist, mit der rotierende Stützen (5) verbunden sind, die mehrere Paare von vertikal angeordneten Werkzeugen (2) umfassen, wobei der Rahmen geeignet ist, mittels einer Dreipunktbefestigung mit einer Traktormaschine (4) verbunden zu werden, wobei die Kegelrad-Einheit (64) geeignet ist, mittels einer Kardanwelle (65) mit einem Zapfwellenantrieb des Traktors verbunden zu werden, die rotierende Eggenvorrichtung **dadurch gekennzeichnet ist, dass** die Egge außerdem mindestens eine Vorrichtung (200) zur automatischen Einstellung der Position eines Paars von Werkzeugen (2) in Bezug auf eine Drehachse (7) der Werkzeuge umfasst, wobei die Vorrichtung (200) mindestens eine mechanische Steuereinheit (201) und eine Bewegungsübertragungseinheit (202) zwischen der Steuereinheit (201) und den Werkzeugen (2) umfasst, wobei die Einheit (201) mindestens eine mit Schlitzen versehene Nocke (53) umfasst, mit der mechanische Mittel (210) verbunden sind, mit denen Steuerhebel (42A, 42B) verbunden sind, die ihrerseits mit Hebeln (41A, 41B) der Steuereinheit (201) verbunden sind, wobei die Hebel (41A, 41B) mit der Bewegungsübertragungseinheit (202) verbunden sind, wobei die Einheit (202) Hebel (46A, Die Einheit (202) umfasst Hebel (46A, 46B) der Übertragungseinheit, die mit den Werkzeugen (2) verbunden sind, wobei die Einheit (202) zwischen den Hebeln (41A, 41B) und den Hebeln (46A, 46B) mehrere Wellen (26, 35A, 35B) und kreisförmige Exzenter (38A, 38B) umfasst, wobei die Wellen (35A, 35B) mit den Hebeln (41A, 41B) verbunden sind und mit den Exzentern verbunden sind, die mit den Hebeln (46A, 46B) in Kontakt sind, bewirkt die mit Schlitzen versehene Nocke (53) der Einheit (201) durch ihre Drehung eine oszillierende Bewegung der mechanischen Mittel (210), die ihrerseits durch ihre Oszillation die Steuerhebel (42A, 42B) in Schwingung versetzen, wobei die Steuerhebel die oszillierende Bewegung auf die Hebel (41A, 41B) übertragen, wobei die Hebel die Schwingungsbewegung in eine Drehbewegung auf die Wellen (35A, 35B) umwandeln, wobei die Wellen eine Drehachse (m) haben, die in Bezug auf die kreisförmigen Exzenter (38A, 38B) exzentrisch ist, wobei die Exzenter auf die Hebel (46A, 46B) drücken und eine Drehung der Werkzeuge (2) um die Drehachse (7) der Werkzeuge bestimmen, Die Werkzeuge sind somit beweglich und bewegen sich auf ihrer Bewegungsbahn tangential zur Kurve der zykloiden-förmigen Bewegung, die sich aus der Drehbewegung der Egge und der Drehbewegung durch den Vorschub des Traktors (4) ergibt.

2. Kreiselegge-Vorrichtung (1) gemäß Anspruch 1, wobei eine Vielzahl von Nocken (53) vorgesehen sind, die auf der gleichen Rotationsachse (n) positioniert werden können, wobei jede ihren eigenen Schlitz (52) aufweist, die unterschiedlichen Bedingungen für die vorgegebene Drehgeschwindigkeit (vp) und Translation (va) entspricht, und die bei Bedarf ausgetauscht werden können, oder es kann eine einzelne kreisförmige Nocke (53) mit mehreren Schlitzen (52) vorgesehen werden.

3. Kreiselegge-Vorrichtung (1) nach den vorhergehenden Ansprüchen, bei der das Profil des Schlitzes (52) direkt den Grad der Drehung der Werkzeuge (2) um ihre eigenen Achsen (7) und damit die Tangente der Werkzeuge an die abgeschlossene Bahn bestimmt, die sich aus der der Egge aufgeprägten rotatorischen Bewegung ergibt.

4. Kreiselegge-Vorrichtung (1) gemäß den vorherigen Ansprüchen, wobei die mechanischen Mittel (210) mindestens einen federbetätigten Wähler (59) einschließen, um die anzulegende kreisförmige Nocke (53) gemäß zwei unterschiedlichen, zu verwendenden Geschwindigkeiten einzustellen, die festgelegt werden sollen.

5. Kreiselegge-Vorrichtung (1) gemäß den vorherigen Ansprüchen, wobei die Auswahl des Schlitzes (52) auf der Grundlage des Drehgrades der Werkzeuge (2) um ihre Rotationsachse (7) und somit der zu verwendenden Nocke (53) für einen gegebenen Betriebszustand manuell oder automatisch erfolgen kann.

6. Kreiselegge-Vorrichtung (1) nach den vorhergehenden Ansprüchen, wobei die Motor-Übertragungseinheit (202), in der die Vielzahl von Wellen (35A, 35B), Exzentern (38A, 38B) und die besagten Hebel (46A, 46B) während des Betriebs in einem glockenförmigen Profil der rotierenden Welle (26) eingeschlossen sind, die in ihrem unteren Teil ein Gehäuse (27) aufweist.

7. Kreiselegge-Vorrichtung (1) nach den vorhergehenden Ansprüchen, bei der die Exzenter (38A, 38B) der Übertragungsgruppe (202) durch Stifte (39A und 39B) fest mit der Drehwelle (26) verbunden sind, wodurch die Drehung jedes Exzenters in Bezug auf ein Loch (40) des Exzenters (38B) ermöglicht wird, die oszillierende Bewegung jedes Exzenters wird durch die Bewegung der Hebel (41A und 41B) erreicht, die an den Steuerwellen (35A und 35B) befestigt sind und ihrerseits durch die Steuerhebel (42A und 42B) betätigt werden, wobei die Stifte (43A und 43B) in den entsprechenden Schlitzen (44A und 44B) gleiten, die in jedem der beiden Exzenter vorhanden sind.

8. Kreiselegge-Vorrichtung (1) nach den vorhergehenden Ansprüchen, bei der die beiden kreisförmigen Exzenter (38A und 38B) die gleiche äußere Form haben, der Exzenter (38B) jedoch zusätzlich einen Schlitz (45) für den Durchgang einer Antriebswelle (35A) aufweist.

9. Kreiselegge-Vorrichtung (1) nach den vorstehenden Ansprüchen, wobei die besagte Vorrichtung (200) zur automatischen Einstellung der Position eines Werkzeugpaares auf jedes Werkzeugpaar (2) der drehenden Stützen (5) angewendet wird.

## Revendications

1. Dispositif de herse rotative perfectionné (1) comprenant au moins un châssis (63) relié à au moins une unité à engrenages coniques (64) à laquelle est relié inférieurement une unité de transmission (11) à laquelle sont reliés des supports rotatifs (5) comprenant une pluralité de paires d'outils (2) disposées verticalement, ledit châssis étant apte à être relié au moyen d'un attelage à trois points à un tracteur (4), ladite unité à engrenages coniques (64) étant apte à être reliée au moyen d'un arbre à cardan (65) à une prise de force du tracteur, ledit dispositif de herse rotative étant **caractérisé par le fait que** ladite herse comprend en outre au moins un dispositif (200) de réglage automatique de la position d'une paire d'outils (2) par rapport à un axe (7) de rotation des outils, ledit dispositif (200) comprenant au moins une unité de commande mécanique (201) et une unité de transmission de mouvement (202) entre ladite unité de commande (201) et lesdits outils (2), ladite unité (201) comprenant au moins une came rainurée (53) à laquelle sont reliés des moyens mécaniques (210) auxquels sont reliés des leviers de commande (42A, 42B) qui sont à leur tour reliés à des leviers (41A, 41B) de l'unité de commande (201), lesdits leviers (41A, 41B) étant reliés à ladite unité de transmission de mouvement (202), ladite unité (202) comprend des leviers (46A, 46B) de l'unité de transmission qui sont reliés lesdits outils (2), ladite unité (202) entre lesdits leviers (41A, 41B) et lesdits leviers (46A, 46B) comprenant une pluralité d'arbres (26, 35A, 35B) et d'excentriques circulaires (38A, 38B), lesdits arbres (35A, 35B) étant reliés aux leviers (41A, 41B) et étant reliés auxdits excentriques qui sont en contact avec lesdits leviers (46A, 46B), la came rainurée (53) de l'unité (201) en tournant provoque un mouvement oscillatoire des moyens mécaniques (210), lesdits moyens par oscillation mettant tour à tour en oscillation lesdits leviers de commande (42A,42B) lesdits leviers de commande transmettant le mouvement oscillatoire aux leviers (41A,41B), lesdits leviers transformant le mouvement oscillatoire en mouvement de rotation aux arbres (35A, 35B), lesdits arbres ayant un axe de rotation (m) excentrique par rapport aux excentriques circulaires (38A, 38B), lesdits excentriques poussent sur les leviers (46A, 46B) déterminant une rotation des outils (2) autour de l'axe (7) de rotation des outils, les outils étant donc mobiles et se disposant dans leur trajectoire de déplacement tangente à la courbe de déplacement cycloïdal dérivant du mouvement de rotation de la herse et du mouvement de translation donné par l'avancement du tracteur (4).

2. Dispositif de herse rotative (1) selon la revendication 1, où sont prévues plusieurs cames (53) pouvant être positionnées sur un même axe de révolution (n), chacune possédant sa propre rainure (52) répondant à différentes conditions de vitesse prédéterminée, de rotation (vp) et de translation (va), et pouvant être remplacée selon les besoins, ou bien une seule came circulaire (53) à plusieurs rainures (52) peut être prévue.

3. Dispositif de herse rotative (1) selon les revendications précédentes, où le profil de la rainure (52) détermine directement le degré de rotation des outils (2) sur leurs propres axes (7), et donc la tangence des outils à la trajectoire complète dérivée du mouvement rototranslatoire imprimé à la herse.

4. Dispositif de herse rotative (1) selon les revendications précédentes, où lesdits moyens mécaniques (210) comprennent au moins un sélecteur (59) actionné par un ressort (60) pour régler la came circulaire d'entraînement (53) à utiliser en fonctionnement selon deux différentes vitesses d'utilisation choisies.

5. Dispositif de herse rotative (1) selon les revendications précédentes, où le choix de la rainure (52) en fonction du degré de rotation des outils (2) sur leur axe (7) de rotation, et donc de la came (53) à utiliser pour une condition de fonctionnement donnée peut être réalisé manuellement ou automatiquement.

6. Dispositif de herse rotative (1) selon les revendications précédentes, où le groupe de transmission moteur (202) où ladite pluralité d'arbres (35A, 35B), les excentriques (38A, 38) et lesdits leviers (46A, 46B) sont enfermés pendant le fonctionnement dans un profil en forme de cloche dudit arbre rotatif (26), qui présente en partie inférieure un boîtier (27).

7. Dispositif de herse rotative (1) selon les revendications précédentes, où lesdits excentriques (38A, 38B) du groupe de transmission (202) sont maintenus solidaires de l'arbre rotatif (26) par des broches (39A et 39B), permettant la rotation de chaque excentrique par rapport à un alésage (40) de l'excentrique (38B), le mouvement oscillant de chaque excentrique est obtenu par le mouvement des leviers (41A et 41B), fixés aux arbres de commande (35A et 35B) et actionnés à leur tour par lesdits leviers de commande (42A et 42B), les broches (43A et 43B) coulissant à l'intérieur des fentes (44A et 44B) appropriées obtenues dans chacun des deux excentriques.

8. Dispositif de herse rotative (1) selon les revendications précédentes, où les deux excentriques circulaires (38A et 38B) ont la même forme extérieure, mais l'excentrique (38B) comprend en outre une fente (45) pour permettre le passage d'un arbre d'entraînement (35A).

9. Dispositif de herse rotative (1) selon les revendications précédentes, où ledit dispositif (200) de réglage automatique de la position d'une paire d'outils est appliqué à chaque paire d'outils (2) de supports rotatifs (5).
